# EUROPEAN PATENT APPLICATION

(11) **EP 2 988 053 A1**
(43) Date of publication of application: **24.02.2016**
(21) Application number: 15177760.4
(22) Date of filing: 21.07.2015
(51) Int. Cl.: F16T 1/00, F16T 1/48, F16T 1/20, B60T 17/00, F16K 31/00

(54) **CONDENSATE DRAIN FOR USE IN A COMPRESSED AIR SYSTEM**

(30) Priority: 22.07.2014 NL 2013238
(71) Applicant: Jorc Holding B.V., 6413 NN Heerlen (NL)
(72) Inventor: DE BIE, Austin Charles, 6413 NN HEERLEN (NL); DE BIE, Darren James, 6413 NN HEERLEN (NL)
(74) Representative: Algemeen Octrooi- en Merkenbureau B.V.

(57) **Abstract**

A condensate drain (11) for use in a compressed air system comprises a fluid receptacle (3) having an inlet (1) and an outlet(7), as well as a fluid level sensor (9) which is arranged in such a manner that a fluid level measured by the fluid level sensor is a measure for the fluid level in the fluid receptacle chamber. The condensate drain comprises a valve unit(8), which is provided downstream of the fluid receptacle chamber for opening and closing the outlet, as well as a control unit(10), which is adapted to control the valve unit on the basis of the fluid level measured by the fluid level sensor. The condensate drain according to the present invention includes a sensor chamber(4), which is in fluid communication with the fluid receptacle chamber. The fluid level sensor is arranged to determine the fluid level in the sensor chamber.

## Description

The invention relates to a condensate drain which is arranged to be used in compressed air systems, particularly in compressed air systems which make use of high pressures.

A condensate drain is known, for example from DE 1 042 327 B, DE 197 14 037 A1 and US 3,905,385. The generally known condensate drain comprises a chamber for collecting the condensate, which has an inlet that is connected to the compressed air system, which makes use of compressed air at a pressure of for example 16 bar. The chamber of the condensate drain is provided with an outlet for discharging condensate out of the chamber. Downstream of the chamber a valve is provided for closing the outlet, in such a way that condensate collects in the chamber, and which may be opened to drain condensate from the chamber. By downstream is meant in the present invention, a direction in which the condensate flows during discharging thereof, for example from the inlet through the chamber to the outlet; By upstream is meant an opposite direction, for example, from the outlet towards the inlet. A moisture sensor is provided In the chamber, which measures the amount of condensate in the chamber. Upon reaching a certain predetermined value of liquid in the chamber, the valve will be opened, so that the condensate will flow from the chamber. After that, the valve is closed, so that further condensate is collected again in the chamber.

It is a disadvantage of the known condensate drain, for example from the documents DE 197 14 037 and US 3,905,385 above, that these are not suitable, or at least less suitable, for being applied at relatively high pressures. When using the known condensate drain at high pressures, the condensate drain may be damaged. In addition, it is a disadvantage of the known condensate drain, that precious compressed air can be lost during discharge of condensate, in particular when it is applied at relatively high pressures.

It is an object of the present invention, to provide an improved condensate drain. It is additionally an object of the present invention, to provide a condensate drain which is suitable for use at high pressures, especially at pressures of several hundred bar, in particular approximately 500 bar. It is further an additional object of the present invention, to provide a condensate drain, whereby damage to the condensate drain, and / or unwanted loss of compressed air, is prevented or at least reduced.

With this objective, the invention provides a condensate drain, having the properties as defined in claim 1. The condensate drain according to the present invention comprises a fluid receptacle chamber having an inlet and an outlet. The inlet is connectable to the compressed air system. Via the inlet, liquid, in particular condensate, may flow in the fluid receptacle chamber. The outlet is arranged to drain liquid, in particular condensate, from the fluid receptacle chamber. The condensate drain comprises a fluid level sensor which is arranged in such a manner that a fluid level measured by the fluid level sensor is a measure of the fluid level in the fluid receptacle chamber. Further, the condensate drain comprises a valve unit, which is provided downstream of the fluid receptacle chamber, and which is adapted to open the outlet for allowing flow, or for closing the outlet for preventing flow, so that condensate can be collected in the liquid receptacle chamber. A control unit is provided, which is adapted to control the valve unit based on the fluid level measured by the fluid level sensor, for opening or closing the outlet. According to the present invention, the condensate drain comprises a sensor chamber, which is in fluid communication with the fluid receptacle chamber. The sensor chamber is an additional chamber. The sensor chamber, for example, forms a branch of the fluid receptacle chamber, such that it is situated non-directly in line with the inlet and the outlet. The sensor chamber is disposed in parallel to the liquid receptacle chamber. According to the present invention, the fluid level sensor is positioned such that it is able to determine the fluid level in the sensor chamber. Preferably, the fluid level sensor is placed in the sensor chamber. Because the fluid level sensor is disposed outside the fluid receptacle chamber, for example in that it is arranged in or near the sensor chamber, and because the sensor chamber is not directly in line, i.e. parallel, to the liquid receptacle chamber, the fluid level sensor is at least somewhat protected against pressure influences from the compressed air system, for example, when draining condensate from the liquid receptacle chamber.

According to the present invention, the sensor chamber is connected to the liquid receptacle chamber by means of a first connection and by means of a second connection spaced apart from the first connection. In this manner, the pressure in the sensing chamber will remain substantially equal to the pressure in the fluid receptacle chamber. No pressure build-up due to trapped air in the sensor chamber will occur. In this way the fluid level in the sensor chamber will be a direct measure of the fluid level in the receptacle chamber, so that the level is easily measured by the fluid level sensor.

The first connection and the second connection can be, for example, connecting channels. The cross-section of the first connection is in an embodiment substantially similar to the cross-section of the fluid receptacle chamber. Thus, a substantial flow to the sensor chamber is possible. The cross-section of the second connection is in an embodiment relatively small compared to the dimensions (particularly the diameter) of the fluid receptacle chamber.

The combination of characteristics of the condensate drain according to the present invention make them particularly secure and robust. This makes the condensate drain according to the present invention suitable for use at relatively high pressures, such as for example up to 500 bar. Thus the object of the present invention is achieved.

Further advantageous embodiments of the condensate drain according to the present invention are subject of the dependent claims. Some of them will subsequently be explained.

In one embodiment, the valve unit according to the present invention is of the type "normally-open", which means that in the absence of an electrical signal, the outlet is opened, such that condensate and compressed air can flow away via the outlet. Such an embodiment is particularly safe, especially in the application of high pressures.

In an alternative embodiment, the valve unit according to the present invention of the type "normally-closed", so that the outlet is closed in the absence of an electrical signal.

The sensor chamber has, in an embodiment, a cross-sectional dimension that is substantially the same as the fluid receptacle chamber.

In one embodiment, the control unit is adapted to control the valve unit for opening the outlet, when the fluid level measured by the fluid level sensor exceeds a predetermined value.

In one embodiment, the fluid level sensor is arranged to measure at least one value of the fluid level. This value then corresponds to at least the desired upper value of the fluid level. Upon reaching the upper value of the fluid level, the control unit will control the valve unit for opening the outlet, for example, for a (relatively short) pre-set time, so that liquid can flow out of the sensor chamber and out of the fluid receptacle chamber, in order to empty it in this way. Such an embodiment has proved to be particularly effective. The time can be set in advance, and the time preferably is relatively short, so that only the condensate flows away, and no valuable compressed air is lost.

For a more accurate emptying of the fluid receptacle chamber, and in addition to prevent undesired venting of compressed air, the fluid level sensor is arranged, in one embodiment, to measure at least two values for the fluid level. The at least two values are then the desired upper value and a desired minimum value, or lower value. The control unit is in this case arranged to open the outlet valve when the fluid level has reached the upper value, and to control the valve unit to close the outlet when the fluid level has reached the minimum value. In this way, it can be ensured in a precise manner that there is always some condensate present in the fluid receptacle chamber, and thus a barrier is formed against unwanted blow-off of compressed air. It is noted that the fluid level sensor may be formed from a single sensor element, or from a plurality of sensor bodies.

An even more precise control is further possible, when the fluid level sensor is arranged to measure at least more than two values for the fluid level, in particular, to continuously measure the fluid level. This may, for example be obtained with the aid of a capacitive sensor, which is placed in the sensor chamber. Such a capacitive sensor for measuring the fluid level is known per se to the skilled person.

In one embodiment, the valve unit comprises a valve inlet and a valve outlet. The valve inlet is directly connected, in one embodiment, to the outlet of the fluid receptacle chamber. The valve unit comprises a plunger positioned between the valve inlet and the valve outlet, and which is arranged to close a plunger opening provided between the valve inlet and the valve outlet. Further, an urging means is provided which forces the plunger in the direction of the plunger opening. Located at a side of the plunger opposite of the plunger opening a pressure chamber is provided. A pressure channel extends from the valve inlet via the pressure chamber to the valve outlet. This pressure channel is closable by means of a closure means to prevent fluid flow through the pressure channel. The pressure chamber is embodied such that when fluid flows through the pressure channel and the pressure chamber -when the plunger opening is closed off by the plunger-, this flow causes a negative pressure in the pressure chamber, which negative pressure causes the plunger to be moved away from the plunger opening, against the force of the urging means. The valve outlet is open in such a way through the plunger opening connected to the valve inlet for discharging liquid. When the closing means interrupts the flow through the pressure channel, the negative pressure is released, such that the plunger is brought in the direction of the plunger opening under the influence of the urging means, and hence it closes. The outlet of the fluid receptacle chamber is thus closed, so that no more condensate can flow from the fluid receptacle chamber. Thus, the present invention provides a normally open valve for use in a condensate drain according to the present invention.

The invention will now be explained in more detail with reference to a description of the attached figures, which show an embodiment of the condensate drain according to the present invention. The figures show:
Fig. 1 - a schematic partial view in partial cross-section of the condensate drain according to the present invention; and
Fig. 2 - a schematic view in partial cross-section of a valve unit of the condensate drain according to the present invention.

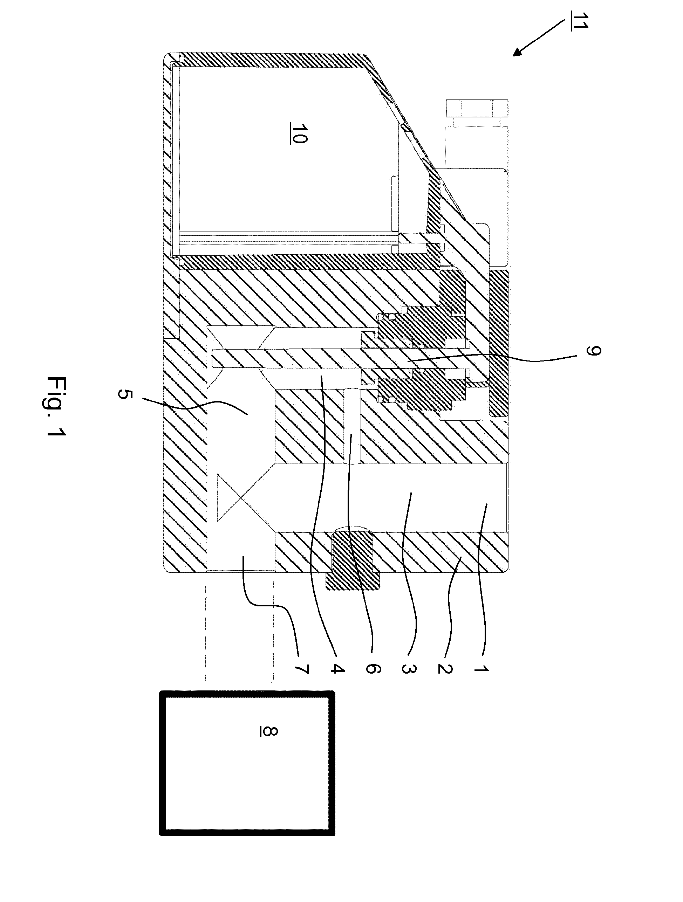

Fig. 1 shows a schematic view in partial cross-section of the condensate drain 11 according to the present invention. The condensate drain 11 comprises a housing 2, in which an inlet 1, a fluid receptacle chamber 3, and an outlet 7 are provided. The inlet 1 is connected or at least connectable to a compressed air system, in particular a compressed air system which is adapted to make use of high pressures. The outlet 7 is connected to a valve unit that is not shown in further detail here. According to the present invention, a sensor chamber 4 is provided that is, in the example shown, in fluid communication with the fluid receptacle chamber 3 by means of a first connection 5 and a second connection 6. The condensate drain 11 further comprises a fluid level sensor 9 which is incorporated into the sensor chamber 4, and which is adapted for measuring a measure of the fluid level in the sensor chamber. The condensate drain 11 further comprises a control unit 10 connected to the liquid-level sensor 9 and the valve unit 8, and which control unit 10 is adapted to control, on the basis of the signal issued by the fluid level sensor 9, the valve unit 8.

In use, the condensate drain 11 is preferably oriented such that the first inlet is directed upwards, that is to say that the inlet 1 and the liquid receptacle chamber 3 are substantially in line with the vertical. As already mentioned, the inlet 1 is connected, at least in use, to the compressed air system. Liquid, for example condensate or moist, is guided into the inlet from the compressed air system. The liquid then collects in the liquid receptacle chamber 3. In the orientation of the condensate drain 11 as shown in Fig. 1, the liquid receptacle chamber 3 is filled with fluid from the bottom or bottom side of the liquid receptacle chamber 3. The fluid level thus rises during filling.

At the bottom side in Fig. 1, the fluid receptacle chamber 3 is connected to the sensor chamber 4 by means of the first connection 5. Preferably, the cross-section of the first connection 5 is sufficiently large to allow a sufficient flow of the fluid to the sensor chamber 4. In the example shown, the dimension of the first connection 5 is substantially equal to the dimension of the liquid receptacle chamber 3. The sensor chamber 4 and the liquid receptacle chamber 3 are thus in communicating connection. The sensor chamber 4 in Fig. 1 extends substantially parallel to the fluid receptacle chamber 3. When the fluid level increases in the fluid receptacle chamber 3, the level of liquid in the sensor chamber 4 will also increase due to the first connection 5.

Preferably, the sensor chamber 4 is designed in such a manner that the fluid level in the sensor chamber 4 is equal to the fluid level in the fluid receptacle chamber 3. In Fig. 1, the condensate drain 11, is to this end further provided with a second connection 6 between the sensor chamber 4 and liquid receptacle chamber 3. The second connection 6 is located at a distance from the first connection 5. In the use orientation of the condensate drain 11 in Fig. 1, the second connection 6 is positioned higher or above the first connection 5. Due to this positioning gas, in particular air, may exit the sensor chamber 4 via the second connection 6 towards the upper side of the fluid receptacle chamber 3. This will prevent that the inflow of liquid via the first connection 5 to the sensor chamber 4 is hindered by gas that is locked between an upper portion of the sensor chamber 4 and liquid in the sensor chamber 4. The second connection 6 forms, as it were, a venting channel for the sensor chamber 4.

The fluid level sensor 9 is provided in the sensor chamber 4. In Fig. 1, the fluid level sensor 9 is partially located within the sensor chamber 4, and partially in the housing 2. The fluid level sensor 9 is a fluid level sensor known per se to those skilled in the art, such as for example a capacitive sensor. It is furthermore conceivable that other types of fluid level sensors are used, such as, for example, analog, optical, or other known fluid level sensors.

The sensor chamber 4 at least partially surrounds the fluid level sensor 9 in order to protect it from pressure influences such as pressure shocks or movements when opening and / or closing of the valve unit 8. The pressure pulse or flow runs through the liquid receptacle chamber 3 from the inlet 1 to the outlet 7. The fluid level sensor 9 is thereby not directly in the path of the pressure surge or flow. Such, it is possible to apply a condensate drain according to the present invention at high pressures, such as 500 bar.

As already mentioned, the fluid level sensor 9 is connected to the control unit 10. The control unit 10 receives a signal from the fluid level sensor 9. From this signal the level of liquid in the sensor chamber 4 is determined, and with that the fluid level in the fluid receptacle chamber 3. On the basis of this signal the control unit 10 controls the valve unit 8. The control unit 10 can control the valve unit 8 in such a way to open the outlet 7 in order to drain the liquid from at least the liquid receptacle chamber 3, when a certain fluid level has been reached in the liquid receptacle chamber 3. Then, the control unit 10 controls the valve unit 8 again to close the outlet 7. Preferably, the time between the opening and closing of the valve unit 8 is of such a short duration that no compressed air is lost. Preferably, the opening and closing of the valve unit 8 is a continuous process.

In one embodiment, the fluid level sensor 9 is arranged to measure a single fluid level, which corresponds to the maximum desired fluid level. When the maximum fluid level is measured by the fluid level sensor 9, the control unit 10 controls the valve unit 8 in order to open the outlet 7 for emptying the fluid receptacle chamber 3. After the expiry of a predetermined time unit, the control unit 10 closes the valve unit 8.

In one embodiment, the fluid level sensor 9 is arranged to measure two fluid levels, which correspond to an upper level and a lower level. When the upper level is measured by the fluid level sensor 9, the control unit 10 controls the valve unit 8 in order to open the outlet 7 for emptying the fluid receptacle chamber 3. When the lower level is measured by the fluid level sensor 9, the control unit 10 controls the valve unit 8 to close the outlet 7. In a further embodiment, the fluid level sensor 9 is arranged to measure continuously, i.e., on at least all the points of contact between the upper and lower level.

The valve unit 8 shown in Fig. 1 is preferably of the type "normally-open", although a "normally-closed" valve also can be used. When not used, in an non-energized state, the normally-open valve unit 8 is in the open state, and thus does not closes the outlet 7. The control unit 10 can close the valve unit 8 by applying voltage to it. The valve unit 8 shown in Fig. 1 is connected to the outlet 7. In one embodiment, the valve unit 8 is directly connected to the outlet 7, but as indicated by the dotted lines in Fig. 1, it is conceivable that the valve unit 8 is located at a distance from the outlet 7.

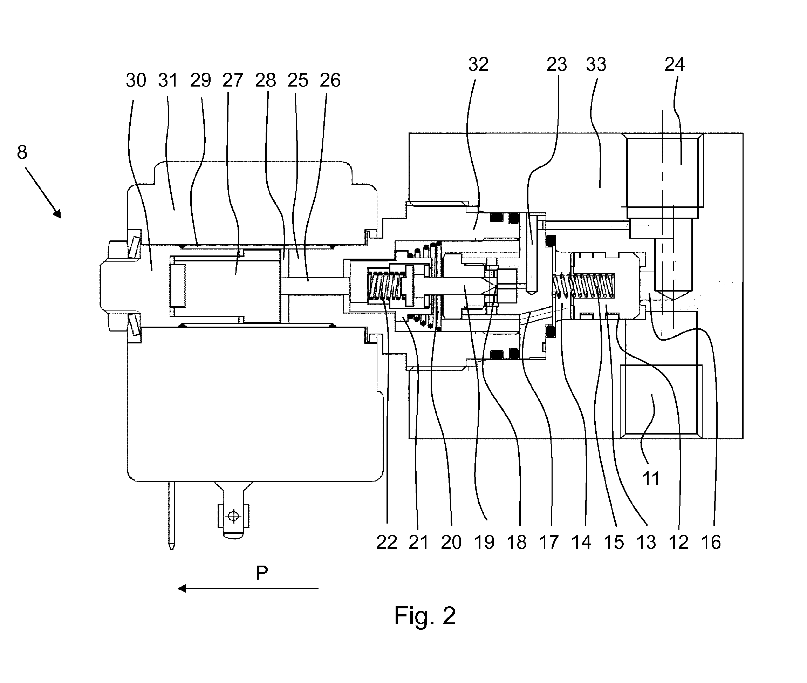

Fig. 2 shows a schematic view in partial cross-section of a valve unit 8 of the condensate drain 11 according to the present invention. It is thereby noted that, in use, the orientation of the valve unit 8 is such that arrow P is substantially coincident with the vertical.

The valve unit comprises a valve inlet 11 that is connected or at least connectable to the outlet 7 (see also Fig. 1). Further, the valve unit comprises a valve outlet 24 provided downstream of the valve inlet for the discharge of condensate. Between the valve inlet 11 and the valve outlet 24 a plunger opening 16 with associated plunger 13 is provided. The plunger 13 can open or close the plunger opening 16, as desired, such that fluid from the valve inlet 11 can flow to the valve outlet 24, or flow of liquid is prevented, respectively. The valve unit 8 further comprises an urging means, in the form of a helical spring 15, connected to the plunger 13, for urging the plunger 13 towards the plunger opening 16. A pressure chamber 14 is provided, at a side of the plunger 13 opposite of the plunger opening 16. This pressure chamber 14 is connected to the valve inlet 11 and the valve outlet 24, by means of a pressure channel 17, 18, 23, which consists of several parts 17, 18, 19. In other words, the pressure channel 17, 18, 23 connects the valve inlet 11 to the valve outlet 24 via the pressure chamber 14. In the pressure channel 17, 18, 23 a closure means 19, in the form of a further plunger 19, is provided near the channel part 18, which closure means 19 is arranged for closing and opening of the pressure channel 17, 18, 23. Due to this configuration, the pressure chamber 14 is arranged such that a negative pressure can be established in the pressure chamber 14, such that the plunger 13 is moved against the urging means, for directly connecting the valve inlet 11 to the valve outlet 24.

The valve unit 8 shown in Fig. 2 comprises a valve inlet 11, through which liquid can flow inside. In the valve unit 8 are, as described above, provided a pair of flow paths for the incoming liquid. The first flow path extends from the valve inlet 11 to the pressure chamber 14, via a first flow channel portion 12 that extends along the plunger 13. Then, the liquid may flow to a passage 18, via a second pressure channel part 17, wherein the passage 18 can be closed by the closing means 19, in the exemplary embodiment shown, the further plunger 19. The further plunger 19 is driven by electrical means, by a driving plunger 27, which is surrounded by a coil 31. After passage 18, the first flow path extends via a third channel portion 23 towards the valve outlet 24.

The second flow path runs from the valve inlet 11 via the plunger opening 16 to the valve outlet 24. This second flow path is closable by bringing the plunger 13 into contact with the plunger opening 16.

The operation of the valve unit 8 will be briefly described step by step.

Fluid enters the valve unit 8 via the valve inlet 11. This liquid then moves through the first channel portion 12 in the movable plunger 13, to the pressure chamber 14, which in Fig. 2 is located above the plunger 13. The urging means 15, in Fig. 2 designed as a first spring 15, forces the plunger 13 to the plunger opening 16. The urging means 15 presses the plunger 13 against an edge, in particular a seat, of the plunger opening 16, so that this plunger opening 16 is closed off. The pressure chamber 14 and the plunger opening 16 are located on opposite sides of the plunger 13.

After the pressure chamber 14, the fluid moves through a second channel portion 17 to a passage 18. The passage 18 is in use released by a closure means 19, in Fig. 2 a movable, further plunger 19. A second spring 20 forces the plunger 19 in an upward direction, in Fig. 2 in the direction of arrow P, to an open condition of the passage 18. The further plunger 19 in Fig. 2 is provided in a movable, additional plunger 21 and the third spring 22.

Then, the fluid moves through the third channel portion 23 to the valve outlet 24. Due to this flow of liquid through the pressure channel 12, 17, 23 formed by the channel parts 12, 17, 23 and the pressure chamber 14, the plunger 13 moves in the upward direction, towards the pressure chamber 14. Due to the flow of liquid at the pressure chamber side of the plunger 13, a negative pressure is created in the pressure chamber, which forces the plunger 13 against the first spring 15, in the direction of arrow P. Due to the movement of the plunger 13 first spring 15 is pressed, so that the plunger opening 16 is opened. Liquid can now also flow directly from the valve inlet 11 through the plunger opening 16, to the valve outlet 24.

The advantage of this configuration of the valve unit 8 described here, is that the above opening of the valve unit 8 is performed completely without current and/or voltage. Thus, the present invention provides a normally open valve unit 8 that is opened when applied to compressed air without electrical signal, voltage and / or current.

The closing of the valve unit 8 however, would require voltage and / or current. On top of the additional plunger 21 a first conductor 25 is provided, having a bump pin 26 therein. This bump pin 26 is connected to the additional plunger 21, and on the opposite side to the driving plunger 27. The driving plunger 27 can move in a driving plunger space 28, which is located in the second conductor 29. The second conductor 29 terminates at one end in the valve member 30. The coil 31 surrounds the second conductor 29. The coil 31, the first valve housing part 32, and the second valve housing part 33 substantially surround the valve unit 8.

When applying voltage to the coil 31, the driving plunger 27 is moved in a direction that is downward in Fig. 2. As a result, the bump pin 26 moves downward, so that the additional plunger 21 also moves downward against the spring force of the second spring 20. The further plunger 19 thereby moves into the passage 18, so that this passage 18 is closed off. The closing of the passage 18 interrupts the flow of liquid through the passage 18, with the result that no liquid can flow through the first channel portion 12. The liquid may now only flow away to the valve outlet 24 via the plunger opening 16. Due to this flow that is only at the plunger opening side of the plunger 13, a pressure differential across the plunger 13 is created. This pressure difference, in combination with the spring force of the first spring 15 urges the plunger 13 towards, and against, the plunger opening 16. The plunger 13 will in this way close off the plunger opening 16, so that no flow of fluid from the valve inlet 11 to the valve outlet 24 is possible. The valve unit 8 is thus effectively closed. When used in a condensate drain as shown in Fig. 2, outflow of liquid from the sensor chamber 4 and the liquid receptacle chamber 3 is prevented by the above-described closure of the valve unit 8.

It will be clear to those skilled in the art that the invention is described above with respect to a preferred embodiment. Many modifications and equivalents are conceivable within the scope of the invention. The protection sought is defined by the appended claims.

## Claims

1. Condensate drain for use in a compressed air system, comprising:
a fluid receptacle chamber (3) having an inlet (1) and an outlet (7);
a fluid level sensor (9) which is arranged in such a way that a fluid level measured by the fluid level sensor (9) is a measure of the fluid level in the fluid receptacle chamber (3);
a valve unit (8), which is provided downstream of the fluid receptacle chamber (3) for opening and closing the outlet (7);
a control unit (10), which is arranged to control the valve unit (8) based on the fluid level measured by the fluid level sensor (9);
a sensor chamber (4), which is in fluid flow communication with the fluid receptacle chamber (3),
wherein the sensor chamber (4) is fluidly connected to the liquid receptacle chamber (3) by means of a first connection (5) and a second connection (6) spaced apart from the first connection (5), wherein the fluid level sensor (9) is provided to determine the fluid level in the sensor chamber (4), and wherein the sensor chamber is disposed in parallel to the liquid receptacle chamber such that the sensor chamber is situated non-directly in line with the inlet and the outlet.

2. Condensate drain as claimed in claim 1, wherein the valve unit (8) is of the type "normally-open".

3. Condensate drain as claimed in claim 1, wherein the valve unit (8) is of the type "normal-closed".

4. Condensate drain according to any one of the preceding claims, wherein the control unit (10) is arranged to control the valve unit (8) to open the outlet (7), when the fluid level measured by the fluid level sensor (9) exceeds a predetermined value.

5. Condensate drain according to any one of the preceding claims, wherein the fluid level sensor (9) is adapted to measure at least one value of the fluid level.

6. Condensate drain according to any one of the preceding claims, wherein the fluid level sensor (9) is adapted to measure at least an upper value and a lower value of the fluid level.

7. Condensate drain according to any one of the preceding claims, wherein the fluid level sensor (9) is adapted to continuously measure the level of liquid.

8. Condensate drain according to any one of the preceding claims, wherein the valve unit (8) comprises:
a valve inlet (11);
a valve outlet (24);
a plunger (13) disposed between the valve inlet (11) and the valve outlet (24), which plunger (13) is arranged to close a plunger opening (16) provided between the valve inlet (11) and the valve outlet (24);
an urging means (15) for urging the plunger (13) towards the plunger opening (16);
a pressure chamber (14), which is located at a side of the plunger (13) opposite of the plunger opening (16);
a pressure channel (17, 18, 23) that connects the valve inlet (11) via the pressure chamber (14) to the valve outlet (24); and
a closure means (19) arranged for alternately closing and opening of the pressure channel (17, 18, 23);
wherein the pressure chamber (14) is arranged to establish, during use, such a pressure differential across the plunger (13), that the plunger (13) is moved against the urging means (15) for directly connecting the valve inlet (11) with the valve oulet (24) via the plunger opening (16).
